# EUROPÄISCHE PATENTSCHRIFT

(11) **EP 0 584 089 B1**
(45) Veröffentlichungstag und Bekanntmachung des Hinweises auf die Patenterteilung: **25.09.1996**
(21) Anmeldenummer: 92907739.4
(22) Anmeldetag: 04.04.1992
(51) Int. Cl.: B26D 7/02

(54) **AUFSCHNITTSCHNEIDEMASCHINE**
MEAT SLICER
TRANCHEUSE DE VIANDE

(30) Priorität: 22.04.1991 DE 4113073
(43) Veröffentlichungstag der Anmeldung: 02.03.1994
(73) Patentinhaber: Bizerba GmbH & Co. KG, D-72336 Balingen (DE)
(72) Erfinder: SCHREIJÄG, Friedrich, D-7461 Ratshausen (DE); FUCHS, Michael, D-7300 Esslingen (DE); FECKER, Viktor, D-7450 Hechingen (DE)
(74) Vertreter: Hoeger, Stellrecht & Partner
(86) Internationale Anmeldenummer: EP9200762
(87) Internationale Veröffentlichungsnummer: WO9218297

(56) Entgegenhaltungen:
- DE-U- 8 806 880
- FR-A- 2 570 316
- GB-A- 380 236
- GB-A- 436 284
- NL-A- 40 361
- US-A- 1 957 191

## Beschreibung

Die Erfindung betrifft eine Aufschnittschneidemaschine nach dem Oberbegriff des Patentanspruchs 1.

Eine derartige Aufschnittschneidemaschine ist aus DE-U-8 806 880 bekannt. Bei dieser Maschine erfolgt die Selbsthemmung der Schneidgutklemmeinrichtung nicht selbsttätig, sie muß vielmehr durch das Betätigungsglied, welches gleichzeitig der Schneidgutzuführung zum Kreismesser dient, durch Verschwenken eines Griffes manuell vorgenommen werden. Die Lösung der Selbsthemmung erfolgt durch Bewegen des Griffes in entgegengesetzter Richtung. Dies hat den Nachteil, daß die Bedienungsperson mit dem Griff nicht nur den Schneidgutschlitten und das Schneidgut verschieben bzw. zuführen muß, sondern auch gleichzeitig noch die Selbsthemmung der Schneidgutklemmeinrichtung aktiviert halten muß. Desweiteren besteht die bekannte selbsthemmende Schneidgutklemmeinrichtung aus vielen, aufwendig zu fertigenden Einzelteilen.

Es ist Aufgabe der Erfindung, unter Verwendung von wenigen, einfachen, möglichst handelsüblichen Bauelementen ein sicheres, automatisch durch bloßes Absenken der Schneidgutklemmeinrichtung erfolgendes Festspannen des Schneidgutes zu erreichen.

Die Aufgabe wird erfindungsgemäß durch die kennzeichnenden Merkmale des Patentanspruchs 1 gelöst.

Weitere Merkmale der Erfindung sind Gegenstand der Unteransprüche 2 bis 9.

Die durch die Erfindung erzielbaren Vorteile liegen vor allem darin, daß die Bedienung der Maschine aufgrund der automatischen Selbsthemmung erleichtert ist und die Fertigung der Maschine durch Verwendung von wenigen und einfachen Bauelementen mit geringem Raumbedarf und geringerem Aufwand erfolgen kann.

Die nachstehende Beschreibung bevorzugter Ausführungsformen der Erfindung dient im Zusammenhang mit beiliegender Zeichnung der weiteren Erläuterung. Es zeigen:
- Fig. 1: eine schaubildliche Darstellung einer Aufschnittschneidemaschine mit wahlweise von Hand oder motorisch angetriebenem Schneidgutschlitten;
- Fig. 2: eine auseinandergezogene Ansicht einer Schneidguthalteeinrichtung bei einem ausschließlich von Hand angetriebenen Schneidgutschlitten;
- Fig. 3: eine auseinandergezogene Ansicht der Hauptelemente einer abgewandelten Ausführungsform einer Schneidguthalteeinrichtung bei einem ausschließlich von Hand angetriebenen Schlitten.

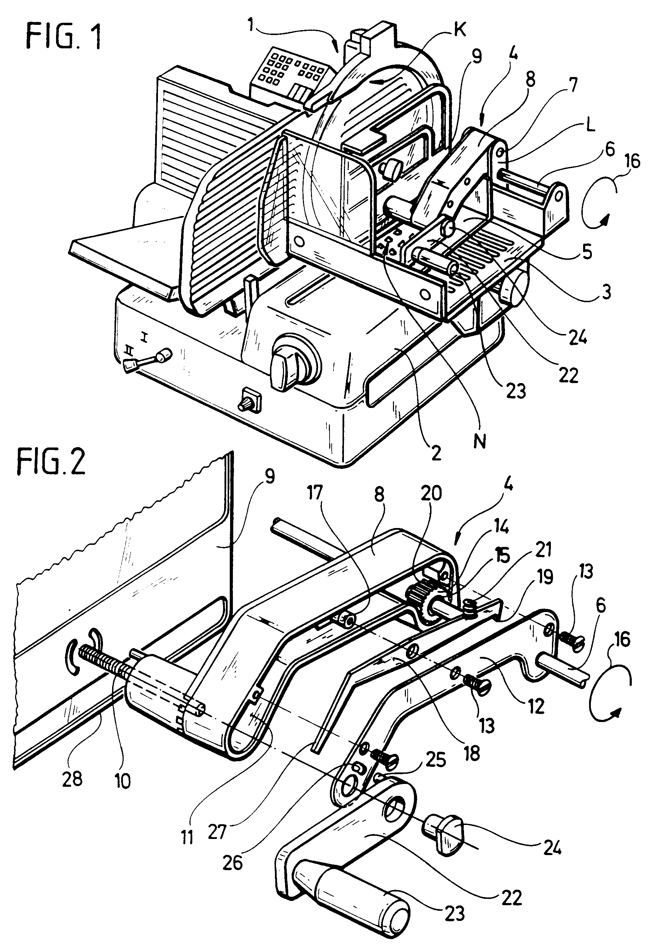

Eine in üblicher Weise mit einem rotierenden Kreismesser K ausgerüstete Aufschnittschneidemaschine 1 besitzt einen auf einem Maschinengehäuse 2 hin- und hergehend geführten Schneidgutschlitten 3. Eine Schneidgutklemmeinrichtung 4 sowie ein Auflageblech 5 sind auf dem Schneidgutschlitten 3 quer zur Schlittenbewegung verschieblich angeordnet und je nach Maschinenausführung von Hand oder motorisch betätigbar. Das Auflageblech 5 umfaßt einen parallel zur Schneidgutschlittenoberfläche verlaufenden, horizontalen Schenkel, sowie einen hierzu senkrechten, vertikalen Schenkel, der in Fig. 1 sichtbar ist. Das Schneidgut wird auf den horizontalen Schenkel aufgebracht. Vom horizontalen Schenkel der Auflageblech 5 stehen kleine pyramidenförmige Greifernocken N nach oben ab, die ein Verrutschen des zugeführten Schneidgutes verhindern, ohne die Schneidgutoberfläche zu verletzen.

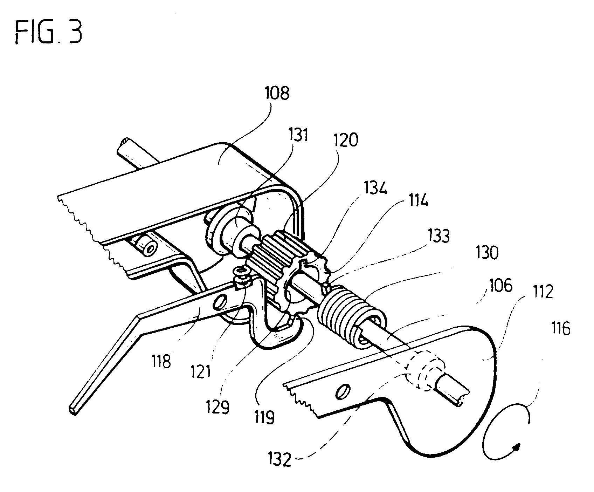

Bei einer Aufschnittschneidemaschine 1 mit ausschließlich von Hand geführtem Schneidgutschlitten 3 ist die Schneidgutklemmeinrichtung 4 schwenkbar und längsverschieblich auf einer drehfest auf dem Schneidgutschlitten 3 angeordneten Führungsachse 6 gelagert (Fig. 2, 3). Im Betrieb wird die Schneidgutklemmeinrichtung 4 während des Schlittenhubes auf der Führungsachse 6 schrittweise von Hand zum Kreismesser K hin verschoben und führt so das festgehaltene Schneidgut dem Kreismesser K zu.

Bei einer Aufschnittschneidemaschine 1 mit wahlweise von Hand oder motorisch angetriebenem Schneidgutschlitten 3 sowie bei ausschließlich motorisch arbeitenden Aufschittschneidemaschinen 1 wird zwischen einer Führungsachse 6 und einer in diesem Falle verdrehfesten Schwenkachse 7 unterschieden, wobei ein Lagerblock L die Schwenkachse 7 drehfest aufnimmt und die Verbindung zur Führungsachse 6 herstellt (Fig. 1).

Im folgenden wird nur eine Ausführungsform mit einem handgeführten Schneidgutschlitten 3 und auf diesem drehfest angebrachter Führungsachse 6 beschrieben.

Das (nicht dargestellte) Schneidgut wird zwischen Auflageblech 5 und Schneidgutklemmeinrichtung 4 festgeklemmt.

Die Schneidgutklemmeinrichtung 4 wird nachfolgend anhand von Fig. 2 und 3 beschrieben, wobei diese Figuren nur die Schneidgutklemmeinrichtung 4 zeigen und Gehäuse 2, Schneidgutschlitten 3 und Auflageblech 5 weggelassen sind.

Die Schneidgutklemmeinrichtung 4 umfaßt einen auf der Führungsachse 6 schwenkbar und verschieblich gelagerten Haltearm 8, der mit einer in nicht näher beschriebenen Grenzen schwenkbaren Schutz- oder Restehalterplatte 9 über einen Bolzen 10 verbunden ist. Der Haltearm 8 ist mit einem Hohlraum 11 versehen, der im wesentlichen die gesamten für die Klemmeinrichtung erforderlichen Bauteile aufnimmt. Der Hohlraum 11 wird mit einem Deckel 12 durch Schrauben 13 verschlossen. Auf der Führungsachse 6 des Haltearms 8 ist ein Zahnrad 14 mittels eines eingepreßten, handelsüblichen Freilaufs 15 derart gelagert, daß das Zahnrad 14 nur eine Drehbewegung in Richtung des Pfeiles 16 ausführen kann und eine Drehung in Gegenrichtung durch die selbsthemmende Wirkung des Freilaufes 15 gesperrt ist.

Im Haltearm 8 ist ein Stehbolzen 17 angeordnet, der als Achse für einen Sperrhebel 18 dient. Der Sperrhebel 18 ist als zweiarmiger Hebel ausgebildet und weist an seinem einen Arm eine Nase 19 auf, die in die Verzahnung 20 des Zahnrades 14 eingreift.

Zwischen dem Sperrhebel 18 und dem Haltearm 8 ist ein Kraftspeicher in Gestalt einer Schraubenfeder 21 angeordnet, welche die Nase 19 des Sperrhebels 18 in die Verzahnung 20 des Zahnrades 14 drückt.

Durch das Einrasten der Nase 19 in die Verzahnung 20 wird ein Formschluß zwischen Haltearm 8 und Zahnrad 14 gebildet, der dem Haltearm 8 ebenfalls nur eine Schwenkbewegung in Richtung des Pfeiles 16, d.h. abwärts zum horizontalen Schenkel des Auflageblechs 5 hin ermöglicht.

Der Bolzen 10 für die Schutzplatte 9 bildet auch die materielle Achse für eine Hebelverlängerung 22 mit Griff 23. Die Hebelverlängerung 22 wird über eine geschlossene Bundmutter 24 am Haltearm 8 um die Achse des Bolzens 10 schwenkbar befestigt. Die Hebelverlängerung 22 trägt einen Zapfen 25, der durch eine in sich geschlossene Ausnehmung 26 im Deckel 12 greift und an einem Arm 27 des Sperrhebels 16 zur Anlage kommt.

In Ruhelage oder bei eingespanntem Schneidgut steht die Hebelverlängerung 22 nahezu in radialer Richtung von der Führungsachse 6 ab, wobei die Drehrichtung für den Haltearm 8 entgegen der Richtung des Pfeiles 16 gesperrt ist und nur eine Absenkbewegung zum Festspannen des Schneidgutes möglich ist. Die Festspannung des Schneidgutes erfolgt zwischen dem horizontalen Schenkel des Auflagebleches 5 und der Unterkante 28 der Schutz- oder Restehalterplatte 9 und bleibt erhalten, da der Haltearm 8 nicht ohne Betätigung der Hebelverlängerung 22 nach oben, wie nachstehend beschrieben, verschwenkbar ist. Die dem Schneidgut, z.B. Wurst oder Fleisch innewohnende Elastizität wird dabei ausgenutzt.

Soll der Haltearm 8 nach oben verschwenkt werden, um Schneidgut zu entfernen oder neues Schneidgut einzulegen, erfolgt dies durch Anheben der Hebelverlängerung 22 mittels des Griffes 23. Die Hebelverlängerung 22 verschwenkt sich dabei in den Grenzen der Ausnehmung 26 um ihre durch den Bolzen 10 gebildete Achse relativ zum Haltearm 8. Der Zapfen 25 drückt dabei auf den Arm 27 des Sperrhebels 18 und schwenkt diesen um seine durch den Stehbolzen 17 gebildete Achse entgegen der Kraft der Feder 21, so daß die Nase 19 außer Eingriff mit der Verzahnung 20 des Zahnrades 14 gelangt. Der Formschluß zwischen Zahnrad 14 und Haltearm 8 ist damit aufgehoben, so daß die gesamte Schneidgutklemmeinrichtung 4 um die Führungsachse 6 nach oben, d.h. entgegen der Richtung des Pfeiles 16 geschwenkt werden kann.

Eine weitere Ausführungsform der Erfindung ist in Fig. 3 dargestellt, wobei der Freilauf 15 gemäß Fig. 2 durch eine Schlingfeder 130 ersetzt ist.

Ein Haltearm 108 bildet, wie bei der zuvor beschriebenen Ausführungsform, das Gehäuse für die wesentlichen Bauteile einer Schneidgutklemmeinrichtung 4 und nimmt zusammen mit einem Deckel 112 die eventuell bei Verwendung einer Schlingfeder 130 mit rundem Drahtquerschnitt entstehenden Axialkräfte auf. Vorzugsweise werden Schlingfedern 130 mit rechteckigem oder quadratischem Drahtquerschnitt verwendet. Eine Führungsachse 106 ist drehfest auf dem Schneidgutschlitten 3 angeordnet und mit einer Bundhülse 131 fest verbunden, wobei ein zugehöriger Deckel 112 einen feststehenden, als Hülse 132 ausgebildeten Ansatz aufweist. Haltearm 108 und Deckel 112 sind um die Achse 106 drehbar gelagert.

Die äußeren Durchmesser der Bundhülse 131 und der Hülse 132 sind gleich. Die Hülsen haben eine glatte, z.B. geschliffene Oberfläche.

Die Schlingfeder 130 ist zu gleichen Teilen auf der mit der Achse 106 verbundenen Bundhülse 131 und auf der mit dem Deckel 112 verbundenen Hülse 132 koaxial angeordnet und besitzt gegenüber diesen Mantelflächen eine geringe Vorspannung. Weiterhin ist die Schlingfeder 130 derart angeordnet, daß sie eine Schwenkbewegung der Hülse 132 und damit des Deckels 112 und des Haltearms 108 in Richtung des Pfeiles 116 zuläßt, während sie sich bei einer Bewegung in Gegenrichtung um die Hülsen 131 und 132 durch die aus der Vorspannung vorhandenen Reibkräfte festzieht und die Schwenkbewegung der Hülse 132 relativ zur feststehenden Bundhülse 131 verhindert.

Zum Lösen des durch die Vorspannung der Schlingfeder 130 in Gegenrichtung zum Pfeil 116 vorhandenen, selbsthemmenden Reibschlusses gegenüber den Hülsen 131 und 132 dient eine an einem Ende der Schlingfeder 131 radial oder auch axial verlaufende Nase 133. Koaxial über der Schlingfeder 130 ist ein als Schaltring dienendes Zahnrad 114 oder alternativ eine Hülse mit Zahnsegment lose gelagert. Eine Lagerbohrung 129 des Zahnrades 114 ist mit einer Nut 134 versehen, in welche die Nase 133 der Schlingfeder 130 eingreift.

Beim Verdrehen des Zahnrades 114 entgegen der Richtung des Pfeiles 116 wird die Schlingfeder 130 über die Nut 134 und die Nase 133 entgegen ihrer Vorspannung geöffnet, so daß der Reibschluß zwischen der Schlingfeder 130 und den Hülsen 131, 132 vermindert bzw. aufgehoben wird. Das Zahnrad 114, die Schlingfeder 130 sowie die mit der Hülse 132 verbundenen Teile der Schneidgutklemmeinrichtung 4 lassen sich alsdann nach oben entgegen der Richtung des Pfeiles 116 verschwenken.

Zum Hochschwenken der Schneidguthalteeinrichtung 4 muß nicht, wie in Fig. 2 dargestellt und beschrieben, ein Sperrhebel 118 mit Nase 119 aus der Verzahnung 120 ausgerastet, sondern in diese eingerastet werden, damit beim Verschwenken das Zahnrad 114 und damit auch die Schlingfeder 130 um die Führungsachse 106 entgegen der Vorspannung der Schlingfeder 130 mitgenommen werden und dadurch die Hochschwenkbewegung ermöglicht wird. Eine Feder 121 entspricht in Fig. 3 der Feder 21 in Fig. 2.

## Patentansprüche

1. Aufschnittschneidemaschine (1) mit einem Maschinengehäuse (2), einem rotierenden Kreismesser (K), einem hin- und hergehend verschieblichen Schneidgutschlitten (3) zur Aufnahme eines in Scheiben zu zerlegenden Schneidgutes und einer um eine Schwenkachse (6, 7; 106) schwenkbaren, quer zur Bewegung des Schneidgutschlittens verschieblichen und einen Haltearm (8, 108) aufweisenden Schneidgutklemmeinrichtung (4), durch die das Schneidgut am Schneidgutschlitten festgespannt und dem Kreismesser zugeführt wird, wobei am Schneidgutschlitten (3) eine verdrehfest gelagerte Führungsachse (6) angeordnet ist, auf der die schwenkbare Schneidgutklemmeinrichtung (4) quer zur Schneidgutschlittenbewegung geführt ist, und zwischen der Schneidgutklemmeinrichtung (4) und ihrer Schwenkachse ein kuppelbares, in einer Drehrichtung selbsthemmendes Sperrelement (14, 15; 114, 130) mit einem von einer Feder belasteten Betätigungsglied (18; 118) vorgesehen ist,
**dadurch gekennzeichnet,**
daß das kuppelbare Sperrelement ein Zahnrad (14, 114) umfaßt und dem Zahnrad als Betätigungsglied ein im Haltearm (8; 108) schwenkbar gelagerter und mit einer Nase (19; 119) ausgestatteter Sperrhebel (18; 118) zugeordnet ist, wobei die Nase (19; 119) in die Verzahnung (20; 120) des Zahnrades (14; 114) einrastbar ist, daß die Feder (21; 121) zwischen Sperrhebel (18; 118) und Haltearm (8; 108) angeordnet ist,
daß die Feder (21; 121) die Nase (19; 119) des Sperrhebels (18; 118) relativ zur Verzahnung (20; 120) des Zahnrades (14; 114) in eine solche Position drückt, daß die Selbsthemmung (14; 114) in der einen Drehrichtung wirksam ist, und daß diese Selbsthemmung durch Verschwenken des Sperrhebels (18; 118) gegen die Wirkung der Feder (21; 121) aufhebbar ist.

2. Aufschnittschneidemaschine nach Anspruch 1, dadurch gekennzeichnet, daß das Zahnrad (14) zu seiner Selbsthemmung mit einem Freilauf (15) versehen ist.

3. Aufschnittschneidemaschine nach Anspruch 1, dadurch gekennzeichnet, daß das Zahnrad (114) zu seiner Selbsthemmung mit einer Schlingfeder (130) versehen ist.

4. Aufschnittschneidemaschine nach einem der Ansprüche 1 bis 3, dadurch gekennzeichnet, daß das Zahnrad (14; 114) in einem Hohlraum (11; 111) des Haltearms (8; 108) untergebracht ist und der Hohlraum durch einen Deckel (12; 112) verschließbar ist.

5. Aufschnittschneidemaschine nach Anspruch 1 und 2, dadurch gekennzeichnet, daß die Feder (21) die Nase (19) des Sperrhebels (18) in die Verzahnung (20) des mit dem Freilauf (15) verbundenen Zahnrades (14) hineindrückt.

6. Aufschnittschneidemaschine nach Anspruch 1 und 3, dadurch gekennzeichnet, daß die Feder (121) die Nase (119) des Sperrhebels (118) aus der Verzahnung (120) des mit der Schlingfeder (130) in Eingriff stehenden Zahnrades (114) herausdrückt.

7. Aufschnittschneidemaschine nach einem oder mehreren der voranstehenden Ansprüche, dadurch gekennzeichnet, daß dem Haltearm (8; 108) eine in Grenzen schwenkbare Hebelverlängerung (22) mit einem Zapfen (25) zugeordnet ist, und der Zapfen (25) beim Schwenken der Hebelverlängerung (22) um ihre Achse (10) relativ zum Haltearm (8; 108) den Sperrhebel (18; 118) entgegen der Kraft der Feder (21; 121) betätigt.

8. Aufschnittschneidemaschine nach einem oder mehreren der voranstehenden Ansprüche, dadurch gekennzeichnet, daß die Schneidgutklemmeinrichtung (4) auf einer in einem Lagerblock (L) verdrehfest angeordneten, gegenüber der Führungsachse (6) separaten Schwenkachse (7; 107) schwenkbar gelagert und der Lagerblock (L) längsverschieblich auf der Führungsachse (6) geführt ist.

9. Aufschnittschneidemaschine nach einem der voranstehenden Ansprüche, gekennzeichnet durch ein gemeinsam mit der Schneidgutklemmeinrichtung (4) quer zur Bewegungsrichtung des Schneidgutschlittens (3) verschiebliches Auflageblech (5) mit nach oben abstehenden Greifernocken (N) zur Aufnahme des Schneidgutes.

## Claims

1. A slicing machine (1) having a machine housing (2), a rotating circular knife (K), a product slide (3), displaceable to and fro, to receive a product to be separated into slices and a product clamping device (4) swivellable around a swivel axis (6, 7; 106), displaceable transversally to the movement of the product slide and having a retaining arm (8, 108), by which the product is clamped on the product slide and is supplied to the circular knife, wherein on the product slide (3) a guide shaft (6) mounted in a torsionally secure manner is disposed, on which the swivelling product clamping device (4) is guided transversally to the product slide movement, and between the product clamping device (4) and its swivel axis an engageable locking element (14, 15; 114, 130), which is self-locking in one direction of rotation, is provided with an actuating member (18; 118) stressed by a spring,
**characterised in that** the engageable locking element comprises a toothed wheel (14, 114) and a catch lever (18; 118) swivellably mounted in the retaining arm (8; 108) and equipped with a nose (19; 119) is associated with the toothed wheel as an actuating element, whereby the nose (19; 119) can be engaged in the toothing (20; 120) of the toothed wheel (14; 114),
**in that** the spring (21; 121) is disposed between catch lever (18; 118) and retaining arm (8; 108),
**in that** the spring (21; 121) forces the nose (19; 119) of the catch lever (18; 118) relative to the toothing (20; 120) of the toothed wheel (14; 114) into such a position that the self-locking (14; 114) is effective in the one direction of rotation,
**and in that** this self-locking can be removed by swivelling the catch lever (18; 118) against the action of the spring (21; 121).

2. A slicing machine according to Claim 1,
**characterised in that** the toothed wheel (14) is provided with a free wheel (15) for its self-locking.

3. A slicing machine according to Claim 1,
**characterised in that** the toothed wheel (114) is provided with a wrap spring (130) for its self-locking.

4. A slicing machine according to one of Claims 1 to 3,
**characterised in that** the toothed wheel (14; 114) is accommodated in a cavity (11; 111) of the retaining arm (8; 108) and the cavity can be closed by a cover (12; 112).

5. A slicing machine according to Claim 1 and 2,
**characterised in that** the spring (21) forces the nose (19) of the catch lever (18) into the toothing (20) of the toothed wheel (14) connected to the free wheel (15).

6. A slicing machine according to Claim 1 and 3,
**characterised in that** the spring (121) forces the nose (119) of the catch lever (118) out of the toothing (120) of the toothed wheel (114) engaging with the wrap spring (130).

7. A slicing machine according to one or more of the preceding Claims,
**characterised in that** a lever extension (22) having a pin (25), which can swivel within limits, is associated with the retaining arm (8; 108), and when the lever extension (22) swivels around its axis (10) in relation to the retaining arm (8; 108) the pin (25) activates the catch lever (18; 118) against the force of the spring (21; 121).

8. A slicing machine according to one or more of the preceding Claims,
**characterised in that** the product clamping device (4) is swivellably mounted on a swivel pin (7; 107)) disposed in a torsionally secure manner in a bearing block (L) and separate from the guide shaft (6) and the bearing block (L) is guided in a longitudinally displaceable manner on the guide shaft (6).

9. A slicing machine according to one of the preceding Claims,
**characterised by** a support plate (5), having upwardly protruding gripping cams (N) to hold the product to be cut, which can be displaced jointly with the product clamping device (4) transversally to the direction of movement of the product slide (3).

## Revendications

1. Machine (1) à découper en tranches, comprenant un carter de machine (2), un couteau circulaire rotatif (K), un chariot (3) mobile en va-et-vient et destiné à recevoir un produit à découper en tranches, et un dispositif (4) de serrage du produit à découper, pouvant pivoter autour d'un axe de pivotement (6, 7 ; 106), mobile en translation transversalement au déplacement du chariot portant le produit à découper et présentant un bras de maintien (8, 108), dispositif par lequel le produit à découper est bloqué par serrage sur le chariot et amené au couteau circulaire, un axe de guidage (6) monté sans possibilité de rotation étant disposé sur le chariot (3) portant le produit à découper, axe sur lequel le dispositif de serrage pivotant (4) est guidé transversalement au déplacement du chariot, et un élément de verrouillage accouplable (14, 15 ; 114, 130), autobloquant dans une direction de rotation et pourvu d'un organe d'actionnement (18 ; 118) sollicité par un ressort, étant en outre prévu entre le dispositif de serrage (4) et son axe de pivotement, caractérisée en ce que l'élément de verrouillage accouplable comprend une roue dentée (14, 114), et un levier de verrouillage (18 ; 118), monté à pivotement dans le bras de maintien (8 ; 108) et pourvu d'un ergot (19 ; 119), étant associé à la roue dentée comme organe d'actionnement, l'ergot (19 ; 119) pouvant être amené en prise avec la denture (20 ; 120) de la roue dentée (14 ; 114), en ce que ce ressort (21 ; 121) est disposé entre le levier de verrouillage (18 ; 118) et le bras de maintien (8 ; 108), en ce que le ressort (21 ; 121) presse l'ergot (19 ; 119) du levier de verrouillage (18 ; 118), par rapport à la denture (20 ; 120) de la roue dentée (14 ; 114), dans une position telle que l'autoblocage (14 ; 114) est actif dans la direction de rotation précitée, et en ce que cet autoblocage peut être supprimé en faisant pivoter le levier de verrouillage (18 ; 118) contre l'action du ressort (21; 121).

2. Machine à découper en tranches selon la revendication 1, caractérisée en ce que la roue dentée (14) est pourvue, pour son autoblocage, d'un mécanisme à roue libre (15).

3. Machine à découper en tranches selon la revendication 1, caractérisée en ce que la roue dentée (114) est pourvue, pour son autoblocage, d'un ressort enroulé (130).

4. Machine à découper en tranches selon une des revendications 1 à 3, caractérisée en ce que la roue dentée (14 ; 114) est logée dans une cavité (11 ; 111) du bras de maintien (8 ; 108), et cette cavité peut être fermée par un couvercle (12 ; 112).

5. Machine à découper en tranches selon les revendications 1 et 2, caractérisée en ce que le ressort (21) presse l'ergot (19) du levier de verrouillage (18) dans la denture (20) de la roue dentée (14) qui est solidaire du mécanisme à roue libre (15).

6. Machine à découper en tranches selon les revendications 1 et 3, caractérisée en ce que le ressort (121) presse l'ergot (119) du levier de verrouillage (118) hors de la denture (120) de la roue dentée (114) qui est en prise avec le ressort enroulé (130).

7. Machine à découper en tranches selon une ou plusieurs des revendications précédentes, caractérisée en ce qu'un prolongement de levier (22), à pivotement limité et pourvu d'un doigt (25), est associé au bras de maintien (8 ; 108), et ledit doigt (25), lors du pivotement du prolongement de levier (22) autour de son axe (10) par rapport au bras de maintien (8 ; 108), actionne le levier de verrouillage (18 ; 118) contre la force du ressort (21; 121) .

8. Machine à découper en tranches selon une ou plusieurs des revendications précédentes, caractérisée en ce que le dispositif (4) de serrage du produit à découper est monté à pivotement sur un axe de pivotement (7 ; 107) distinct de l'axe de guidage (6) et disposé sans possibilité de rotation dans un bloc de palier (L), et ledit bloc de palier (L) est guidé en translation longitudinale sur l'axe de guidage (6).

9. Machine à découper en tranches selon une des revendications précédentes, caractérisée par une tôle de support (5), pouvant être déplacée conjointement avec le dispositif (4) de serrage du produit à découper, transversalement à la direction de déplacement du chariot (3) portant le produit à découper, ladite tôle étant pourvue d'ergots d'accrochage (N) saillants vers le haut pour recevoir le produit à découper.
